# EUROPEAN PATENT SPECIFICATION

(11) **EP 0 547 863 B1**
(45) Date of publication and mention of the grant of the patent: **02.04.1997**
(21) Application number: 92311417.7
(22) Date of filing: 15.12.1992
(51) Int. Cl.: F16K 1/36, F16K 1/44

(54) **Improvements in safety valves with flat elastomeric seals**
Sicherheitsventil mit flacher Elastomerdichtung
Soupape de sûreté avec garniture plate en élastomère

(30) Priority: 16.12.1991 GB 9126637
(43) Date of publication of application: 23.06.1993
(73) Proprietor: SEETRU LIMITED, Hanover Place Bristol BS1 6UT (GB)
(72) Inventor: Varga, Otto Herman, Bradford on Avon, Wiltshire (GB); Kelly, Anthony John, Long Ashton, Bristol BS18 9NA (GB)
(74) Representative: Livsey, Gilbert Charlesworth Norris

(56) References cited:
- DE-A- 2 852 369
- FR-A- 875 240
- FR-A- 2 173 468
- US-A- 4 140 148

## Description

This invention relates to a safety valve comprising a valve body including an annular valve seat which comprises a seating portion surrounding an annular lip upstanding from that seating portion, a plunger slidable within the valve body, an elastomeric seal carried in a recess of the plunger, and means for biassing the plunger in a direction towards the valve seat to force the seal into sealing contact with the lip of the valve seat, and in which the full depth of the seal lies within the depth of the recess of the plunger so that, in the closed position of the valve an end face of the plunger rests in direct contact with the seating portion of the valve seat and wherein one or more discharge ports is or are provided.

Spring loaded blow-off or safety valves are known in which the operational front end or nose of a spring loaded movable valve closure member or plunger is fitted an elastomeric sealing ring functioning as a so-called hydrostatic seal in which the fluid pressure acting on the seal enhances the sealing pressure exerted by the seal on the seat. Such an arrangement forms the subject matter of or prior proposal as set forth in British Patent Specification No 1 601 130 (corresponding to German Specification No DE 28 52 369 A1). It is also known to provide spring loaded blow-off or safety valves with a flat elastomeric seal which is disc-like in shape and which abuts against a valve seat, the latter being of the type having a raised lip which engages the seal to make sealing contact therewith when the valve is in its closed condition.

Safety valves of these kinds are widely used as they are economic in construction and give reliable sealing within predetermined pressure ranges. The seal is generally of rubber or other elastomeric material.

One purpose of this invention is to provide a valve having a stop mechanism which limits deformation of the seal. Further objects are to provide a valve with a seat sealing profile and valve body vent means which will mitigate or eliminate problems of valve sticking as described below, and which will serve to protect the elastomeric seal from excessive distortion and damage, all to promote long service life, and provide a high discharge capacity for the safety valve. At the same time, the component parts of the safety valve must be readily manufactured and also economic in the use of materials.

The safety valve according to this invention is defined in claim 1, further preferred features of the invention being defined in the subsidiary claims.

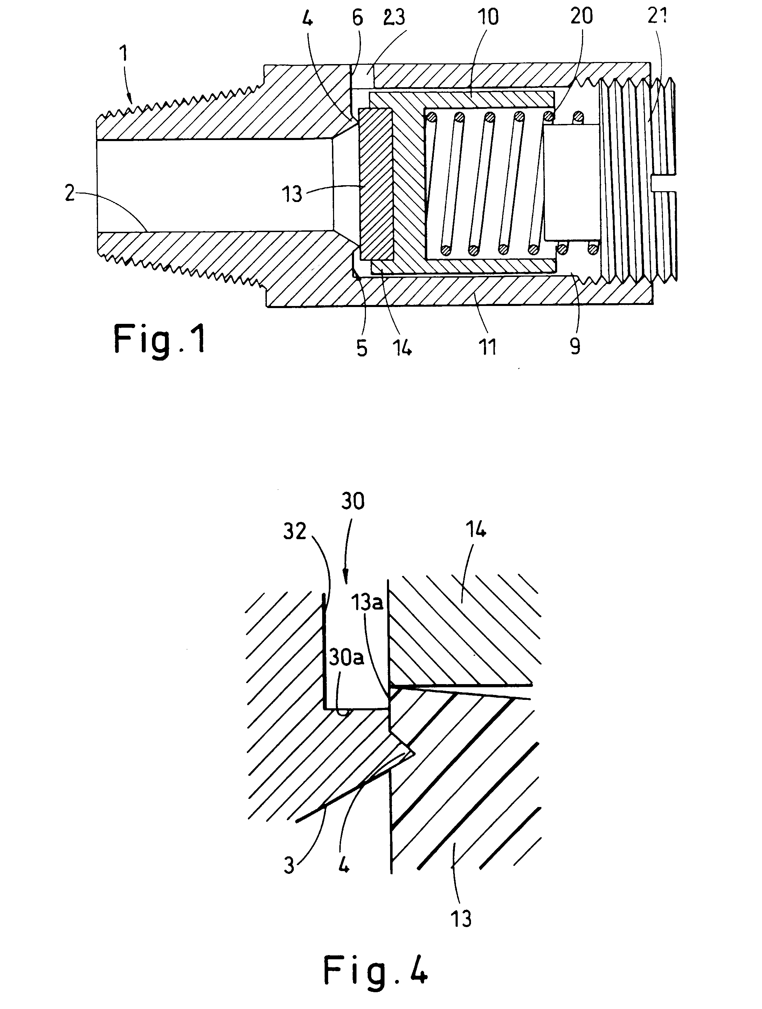

Reference will now be made to the drawings where Figure 1 is a vertical cross-sectional view of a safety valve known from the prior art.

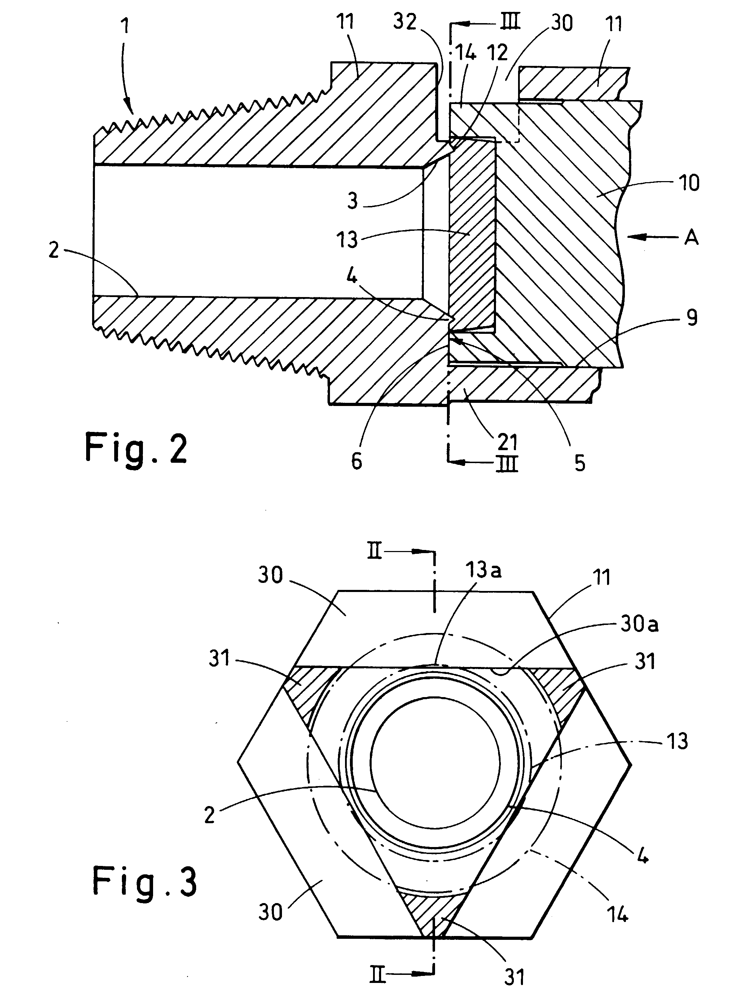

Figures 2, 3 and 4 of the accompanying drawings show by way of example, the significant parts of one embodiment of safety valve according to this invention, the remainder of the valve being conventional. Figure 2 is a vertical cross-sectional view taken on the line II-II of Figure 3, and Figure 3 is a transverse cross-sectional view taken on the line III-III of Figure 2. Figure 4 is an enlarged detail of Figure 2.

Referring first to Figure 1 which is a simplified diagrammatic vertical cross-sectional view of a safety valve known from the prior art, 1 generally represents a valve body spigot portion defining an inlet bore 2 terminating in a valve seat generally designated 5. The valve seat 5 includes an annular lip portion 4, which is surrounded by, and rises protuberant from, a valve seat face portion 6. The valve body spigot portion 1 forms part of a valve body 11 which defines a generally cylindrical bore 9 in which a valve closure plunger generally designated 10 is movable along an axis A. The closure plunger 10 is urged towards the valve seat 5 by spring means 20.

As will be well known to those skilled in the art, the biassing force exerted by the spring means will be set, whether by pre-adjustment during manufacture, or by adjustment in situ when the valve is in its operational condition, to achieve opening of the safety valve at a specific blow-off pressure of the fluid in the inlet bore 2 relative to the pressure at the discharge region downstream of the valve closure to be described further below. Although a variety of mechanisms for adjusting the biassing force are in use, as depicted in the drawing, and purely by way of example, the biassing force exerted by the spring 20 against the plunger 10 may be set or adjusted with the aid of a plug 21 which can be screwed into or out of the bore 9. As is well known the adjustment means may include a device which prevents unauthorized tampering, once the blow-off pressure has been properly set.

The end of the plunger 10 which is adjacent the seat 5 is the operational front end or nose of the plunger, and accordingly at this end adjacent the seat 5, the valve closure plunger 10 has a nose rim 14 which is is shaped to define a seal recess 12 housing an elastomeric disc shaped seal 13.

In operation, fluid under pressure in the bore 2 bears against the seal carried on the nose of plunger 10 which is urged towards seat 5 by the force exerted by the spring 20, this causing the seal 13 to bear upon the raised lip 4 of the valve seat 5. If and when the pressure of the fluid in the inlet bore 2 rises sufficiently, such that the force exerted by spring 20 is overcome, the plunger 10 moves away from the valve seat 5, and the seal disc 13 becomes disengaged from the lip 4. Fluid then passes past the valve seat 5 to be discharged, usually through one or more ports 23 formed in the valve body 11 downstream of the valve seat 5. If and when fluid pressure subsequently drops, the spring 20 is eventually effective to move the plunger 10 towards the seat 5 and the seal 13 re-engages the raised lip 4 and the valve closes. As will be well understood it is usually the case that such safety valves are likely to be found in the closed condition for the major part of their operational lives.

When a valve of this type is stored or even installed in the circumstances that, for a significantly long period of time, no fluid pressure acts upon it, the spring tends to force the plunger 10 with its seal 13 against the raised seal lip 4 and this results in deformation of the seal material. Subsequently, when fluid pressure is applied, the spring force will gradually be counter-balanced by the fluid in the inlet bore 2 until at some set pressure, the fluid pressure force acting over the effective sealing area which is determined by the diameter of the raised seat lip 4, will exactly counter-balance the spring force. Any further increases in fluid pressure should cause the plunger to lift and allow flow past the cooperating valve sealing elements.

However, it is a common shortcoming of safety valves of this type that the elastomeric seals get excessively deformed when maintained for significant periods in the absence of fluid pressure; and this may not only lead to a deterioration of sealing performance, but it may also give rise to valve sticking, leading to failure of the valve to open at the predetermined set pressures. This tends particularly to be the case after prolonged periods of valve inaction. When the valve is then required to open it is often found that it will require substantial excess fluid pressure, that is above and beyond the predetermined set pressure, to produce an initial discharge. Once a degree of sticking has been overcome the valve may subsequently function correctly at its set pressure, but this will persist only until it is again left inoperative for a significant period of time, when the sticking phenomenon is liable to reappear.

The significant parts of a safety valve according to this invention are shown in Figure 2, the remaining parts of the valve being conventional. For example, the plunger 10 will be loaded by a spring, as in Figure 1, and conventional means for adjusting and setting blow off pressure may be provided.

According to one aspect of this invention and as depicted in Figure 2, the nose rim 14 on the plunger is formed to have an end face surface which is substantially flush or co-planar with the sealing face of the seal 13, the end face of the rim 14 facing the valve seat 5 being thus, flat annular. Also, the face portion 6 of the valve seat 5, which face portion extends fully around the upstanding lip 4, is made correspondingly flat annular, all so that in the closed condition of the valve, as depicted in Figure 2, the end face surface of the rim 14 of the plunger 10 abuts or rests directly against the seat face portion 6 outside the lip 4. These means constitute stop means which limit the degree of deformation undergone by the seal 13 due to the action of the protuberant annular lip 4 against which bears the seal 13, to close the valve. As will be explained below, the contact region between the plunger end face and the seat face portion 6 is discontinuous so that it does not extend all around the seal 13.

Advantageously, the lip 4 is so disposed that in the said closed condition of the valve it is spaced at least 0.4 mm and preferably 0.5 mm to 1.5 mm inside the inner edge of the plunger rim 14 when said inner edge of the plunger rim 14 has a diameter not exceeding 60 mm. In general the protuberant annular lip 4 will be spaced inwardly of the outer periphery of seal 13 by a distance which is at least 1.2% of the radius of the seal 13.

The precise cross-sectional shape of the annular lip 4 is not critical. However, such lip should not normally be undercut or have a face which is parallel to the axial direction A of the valve: to provide such would tend to lead to problems of valve sticking. The lip may for example be an arc of a circle whose centre is located beneath the level of the valve seat 6 (that is to the left of the section line III-III in Figure 2) and which is tangential to the wall of the inlet bore 2. This would also impart a degree of conicity to the end of that inlet bore, compare reference numeral 3 in Figure 2. However machining is much simplified if that annular lip 4 is made V-shaped in cross-section, as it is in the illustrated embodiment. The valve seat 5, which generally will be an integral part of the valve body 11, will have, facing the seal, the inverted 'V' shaped protuberant lip 4 rising from the flat annular seat face portion 6 immediately surrounding it. The angle of the 'V' of the protuberant annular seat lip 4 may be about 60° to 120°. The precise value of this angle is not of essential importance, so that other values may be used, depending upon the type of fluid which the relief or safety valve is being used to control, and also upon the properties of the elastomeric material employed for the sealing disc 13 housed in the recess of the valve plunger 10. Also the flow performance of the valve when in a partially or fully open position may be taken into account when determining this particular.

Preferably the inlet bore 2 terminates in a throat portion 3 which is conical and leads directly into the lip 4 so as to form the inner surface thereof.

When the valve plunger 10 is in its closed position and fully seated, the 'V' shaped protuberant lip 4 of the valve seat 5 will, by deformation of the elastomeric material penetrate into the seal 13 to an extent determined by the height of the lip 4 in relation to the depth of the surrounding rim 14 of the plunger 10 which is in direct contact with the face portion 6 of the seat 5.

As will be understood from the foregoing, the maximum degree of penetration of the lip 4 into the seal 13, in the closed condition of the valve, is limited by the stop means constituted by the flat annular end of the plunger rim 14 abutting on the seat face portion 6. It follows that the amount of penetration will correspond to the volume of the lip 4 and in particular to the protuberant height of this lip which upstands from the face portion 6. This height of the lip 4 is preferably between 1 % and 5% of the diameter of the crest of the lip 4. Generally speaking, the optimum lip height is a lower proportion of the lip diameter as that diameter increases. Thus, for lip diameters in excess of 20 mm, the lip height is preferably from 1 % to 4% of that diameter, and for lip diameters of up to 25 mm, the lip height is preferably between 1.5% and 5% of that diameter. For example, if the lip diameter is about 15 mm, the lip height may be about 0.4 mm.

One feature of this construction, is that because the seal 13 is completely confined within the surrounding rim 14, there is little likelihood of the seal material becoming trapped between abutting direct surfaces in the closed condition of the valve. To assist in this respect, the shoulder of the rim 14 adjacent the seal and adjacent the lip 4, may be cut away or machined so as to be conical, rounded, or otherwise softened.

Normally, in known safety valves of this general type, the discharge, downstream of the valve closure, is constituted by one or more ports ( 23 in Figure 1 ) in the form of holes which may conveniently be formed by radial drilling of the valve body.

However, according to an advantageous aspect of this invention and, in order to ensure a high discharge capacity for safety valves having the features described so far, the outlet ports in the valve body are formed in the manner of slots cut into it, rather than outlet holes which are drilled into the outer body wall. For a given lift of the safety valve plunger 10, discharge ports in the form of slots can offer substantially larger outflow passages than might be the case with circular ports. This is particularly the case if the lower edge of a slot constituting a discharge port is taken below the level of the seat face portion 6 surrounding the seat sealing lip 4.

Thus, and as shown more particularly in Figure 3, the valve body is cut-away at 30 to form slots and leaving wall portions 31. And as will be seen best in Figure 3, the removal of material to form the cut-away slots at 30 is so extensive, that material is removed at 32 to a plane below the level of the seat face portion 6, which plane is on the opposite side of the level of the valve seat from the plunger 10, whereby a thin segment 13a of the face of the sealing disc 13 is exposed above the base wall 30a of each slot. This is found to promote a better-defined action of the valve in the event of blow-off. The adoption of this feature allows a larger mass flow of the gas whose pressure is being relieved in the first instants of blow-off and before the valve has fully opened. As a result of this, reaction forces acting on the valve plunger 10 due to the dynamic flow of this gas promote a more rapid and cleaner lifting of the plunger to put the valve into the fully open condition for the rapid relief of the excess pressure in the system to which the valve is attached.

This projection of the sealing disc 13 into the base of the slot may for example amount to about 0.1 to 0.2 mm. It is advantageous for the area of the exposed segment 13a to be limited so as to avoid the formation of a bead of the seal elastomer which contacts the wall 30a forming the base of the slot 30, since this could cause sticking of the valve. Thus, in the embodiment illustrated where the base wall 30a of the slot is substantially parallel to the axis A of the valve, a break angle of 45° or even more can be tolerated. Thus, it is preferred that the area of the exposed segment 13a and the stiffness of the material of the sealing disc 13 are selected substantially to avoid the formation of a bead of the seal material which contacts the wall 30a forming the base of the slot 30.

The inward base 30a of the slots 30 may be curved in the section shown in Figure 3, but it is preferably, and as shown, substantially a flat surface, which may lie parallel to a tangent of the sealing disc 13 and, as stated, this base lies close to and preferably within the periphery of the disc 13.

In such a construction, the rim 14 of the plunger rests directly on the valve seat portion 6 only in those areas of the seat portion 6 which lie inwardly of the wall portions 31. By this measure, when the plunger 10 lifts to open the valve, with the seal 13 becoming disengaged from the seat 5, fluid may very easily flow past the valve seat and into the discharge ports or vents constituted by the regions cut away at 30, with impediment to flow being minimal. This promotes rapid valve opening and flow at the predetermined set opening pressure.

While the inner base of the slot 30 has been described as flat, it may be slightly curved, concave or convex, according to the cutting method used to produce the outlet slots in the valve body 11. In a particular preferred execution, and as shown, a hexagonal shaped valve body may have three outlet slots cut into it, so that the base of the slot forms substantially part of an equilateral triangle, which may or may not have its corners truncated. Such an arrangement has the advantage that the contact faces between plunger and seat in the area between the slots are fairly substantial, and in fact much wider than the non-existent or very narrow contact face at the base of each slot. This will avoid any damage or burring on hard valve closure, which might occur when a safety valve snaps into a seated position as the pressure of the fluid being controlled rapidly falls. Thus, while a safety valve according to this invention will normally have at least two discharge ports, the illustrated example possesses three such ports.

In an alternative construction, in the closed condition of the valve, the plunger rim 14 rest directly upon the valve seat face 6 all around the upstanding V-shaped lip 4, and at the regions where the bases of the outlet slots approach nearest to the outer periphery of the sealing disc 13, there will be the area where width of the contact area between the plunger rim 14 and the annular seat portion 6 will be smallest in the closed position of the valve. For a valve with a seal diameter of 40-60 mm, this minimum width might have a dimension of say 0.5 mm, and from that location, the width will progressively widen along the circumference of the seal to a maximum width determined by the outer diameter of the valve plunger rim 14 within which the sealing disc 13 is set.

In more general terms, in the annular region where the flat annular end face of the plunger (10) makes direct contact with the flat annular face portion (6) of the valve seat (5), such region where said direct contact is made will have a radial width which is equal to say 1.5% of the radius of the seal 13.

A preferred feature of the invention is also depicted in Figure 2, in that while the face of the seal which faces the lip 4 of the valve seat 5 is flush and co-planar with the fully surrounding flat annular plunger nose rim 14, and while this face part of the seal fully fills the plunger recess in this facing region, nevertheless the seal is tapered inwardly of the plunger recess, so as not completely to fill the base region of the recess. Thus as shown, the seal 13 is shaped as a frusto-conical disc. Per contra, the seal could be disc shaped, but with cylindrical sides, and the recess 14 could be widened at its base. Or again the base of the recess 12 could be slightly dished. The purpose of any of these measures is to leave a space at the base of the recess 14 into which the elastomeric material, of which seal 13 is formed, can move when the seal is distorted as the seat lip 4, in effect, moves into it and upsets its passive or natural unstressed profile.

A further preferred feature of the design of the seat and seal arrangement now proposed is that no part of the seal 13, when deformed in the closed condition of the valve, enters the cylindrical part of the inlet bore 2 leading to the lip 4 of the seat 5; the behaviour of the parts of the valve seat and seal configuration being such that because the elastomer makes contact with the inner conical surface of the lip 4, only release between these surfaces is of significance and the seal is not allowed to behave such that it extends to any significant extent into any cylindrical region which forms part of the inlet bore 2 of the safety valve. To this end it is preferred that the axial length of the conical throat 3 of the bore 2 is at least 1.25 times the height of projection of the lip 4 from the seating face portion 6 of the valve.

The clean lift off which is required when the valve opens is promoted in part by the fact that the plunger nose rim 14 has its flat annular surface which is flush with the sealing surface of the disc 13. This gives good aerodynamic flow as fluid begins to discharge past the raised lip 4 and this good flow characteristic assist lifting of the plunger as the valve opens.

The features of the invention described above achieve three main objectives:
1. The penetration of the seat lip 4 into the elastomeric seal 13 is limited by the stop mechanism of the plunger rim 14 abutting on the seat face portion 6. It is preferred that this direct contact between the plunger end face and the seat portion 6 is discontinuous, this promoting rapid lift-off when the set blow-off pressure is reached.
2. Outside the sealing region (where the seat lip 4 engages the seal 13), the elastomeric seal material, in the closed position of the valve, is substantially constrained and supported by metallic surfaces (the plunger rim 14 abutting with the seat face portion 6 of the valve seat 5) and so little, of the elastomer is left unsupported that no part of the elastomer is squeezed out to form a highly stressed bead which might be damaged in an open fluid stream; or which might cause sticking and adherence to the valve seat.
3. On the inside of the seat sealing lip 4, contact between the elastomeric seal material and the seat, (usually of metal such as brass, but possibly of reinforced plastics material), is entirely on an inclined conical face at the tapered region 3, so that the seal 13 disengages immediately when the plunger 10 lifts; i.e. immediate separation occurs between the valve seat and the seal.
   This would not be the case if when closed the elastomeric seal were allowed to extend to the cylindrical part of the valve inlet bore 2, as referred to above, so that on initial lift of the plunger 10, sliding might take place between the seal material and the bore. Such sliding movement could give rise to substantial frictional forces which can cause valve sticking and erratic performance on valve opening.
4. The features described promote, on the one hand, reliable fluid tight sealing when the valve is closed, and on the other hand, they ensure clean lift-off at precisely predetermined or set blow-off pressures when the fluid forces rise to equal the spring force applied to the valve plunger; and these characteristics are obtainable even after extensive periods when there is no fluid pressurization of the seal and it is left subject only to spring force.

Tests have shown that a safety valve incorporating these features works reliably, maintains its set pressure even after long storage, has a substantial discharge capacity and is essentially economic in procurement and manufacture. Other advantageous features have been referred to hereinabove.

## Claims

1. A safety valve comprising
a valve body (11) including an annular valve seat (5) which comprises a seating portion (6) surrounding an annular lip (4) upstanding from that seating portion (6),
a plunger (10) slidable within the valve body (11),
an elastomeric seal (13) carried in a recess (12) of the plunger, and
means for biassing the plunger (10) in a direction (A) towards the valve seat (5) to force the seal (13) into sealing contact with the lip (4) and the valve seat (5), **wherein**
the full depth of the seal (13) lies within the depth of the recess of the plunger (10) so that, in the closed position of the valve an end face of the plunger rests in direct contact with the seating portion (6) of the valve (5) and wherein one or more discharge ports is or are provided
**characterised in that the or** each **said discharge port is** in the form of a slot (30) cut through the wall for of the valve body (11) in a direction substantially perpendicular to such biassing direction (A), **and in that** the opposed side faces of **the or each** said slot **lie** on opposite sides of the plane of the seating portion (6) of the valve seat (5) so that the seating end of the plunger **(10)** is exposed in said slot(s).

2. A safety valve according to claim 1 wherein the depth of each suche valve (30) and the radius of the seal (13) are such that a segment (13a) of the face of the seal (13) is exposed within the base of each slot.

3. A safety valve according to claim 1 or 2, wherein that face of the seal (13) which bears against the annular lip (4) lies substantially flush with the end face of the plunger (10) which seats on the valve seating portion (6).

4. A safety valve according to claim 3, wherein said lip (4) on the valve seat (5) is V-shaped and upstands protuberant from the seating portion (6) of the valve seat; and wherein the nose end face of the plunger (10) is correspondingly flat annular and in the closed condition of the valve, rests in direct contact with the seating portion (6) of the valve seat.

5. A safety valve according to claim 2, and wherein the area of the exposed segment (13a) and the stiffness of the material of the sealing disc (13) are selected substantially to avoid the formation of a bead of the seal material which **might** contact the wall (30a) forming the base of the slot (30).

6. A safety valve according to any of the preceding claims, wherein there are two or more such valve slots (30) with the slots being separated by **wall portions** (31) of the valve body (11), and wherein the principal areas of contact between the end face of the plunger (10) and the seating portion (6), in the closed condition of the valve, occurs in sectors located inwardly of the said **wall portions** (31).

7. A safety valve according to any one of claims 1 to 6 wherein an inlet bore (2) of the valve terminates in a conical throat portion (3) which leads directly to the upstanding lip (4) to form the inner surface thereof.

8. A safety valve according to any one of claims 1 to 7 wherein the seal (13) and/or the recess (12) is or are so shaped that the seal incompletely fills the recess (12) of the plunger (10) in the unstressed condition of the seal.

9. A safety valve according to any preceding claim, wherein the lip (4) has a crest diameter of up to 25 mm and upstands from the seating portion (6) of the valve seat (5) by a height which is equal to between 1.5 % and 5 % of its crest diameter.

10. A safety valve according to any of claims 1 to 8, wherein the lip (4) has an crest diameter greater than 20 mm and upstands from the seating portion (6) of the valve seat (5) by a height which is equal to between 1 % and 4 % of its crest diameter.

11. A safety valve according to any preceding claim, wherein said lip (4) is so disposed that it is spaced inwardly of the outer periphery of the seal (13) by a distance which is at least 1.2 % of the radius of the seal.

12. A safety valve according to claim 7 wherein when the valve is closed, contact between the seal (13) and the inlet bore (2) of the valve is confined to the conical throat portion (3) thereof.

13. A safety valve according to claim 12, wherein the axial length of said conical throat portion (3) is at least 1.25 times the height of projection of the lip (4) from the seating portion (6) to the valve seat.

14. A safety valve according to any one of claims 1 to 13 wherein the elastomeric seal (13) is shaped as a frusto-conical disc.

## Patentansprüche

1. Ein Sicherheitsventil mit
einem Ventilgehäuse (11), das einen ringförmigen Ventilsitz (5) umfaßt, der einen Sitzabschnitt (6) besitzt, welcher eine diesen Sitzabschnitt (6) überragende, ringförmige Lippe (4) umgibt,
einem im Ventilgehäuse (11) verschiebbaren Plungerkolben (10),
einer in einer Ausnehmung (12) des Plungerkolbens angeordneten Elastomerdichtung (13) und
einem Mittel zur Erzeugung einer Vorspannung auf den Plungerkolben (10) in einer Richtung (A) auf den Ventilsitz (5) zu, um die Dichtung (13) in dichtenden Kontakt mit der Lippe (4) des Ventilsitzes (5) zu bringen, wobei die Gesamtdicke der Dichtung (13) innerhalb der Tiefe der Ausnehmung des Plungerkolbens (10) liegt, so daß, in der geschlossenen Stellung des Ventils, eine Endfläche des Plungerkolbens in direktem Kontakt auf dem Sitzabschnitt (6) des Ventilsitzes (5) aufsitzt und bei dem eine oder mehrere Auslaßöffnungen vorgesehen sind, dadurch gekennzeichnet, daß die Auslaßöffnung oder jede der besagten Auslaßöffnungen die Form eines Schlitzes (30) aufweisen, der durch die Wand des Ventilgehäuses (11) in einer Richtung geschnitten ist, die im wesentlichen senkrecht zu dieser Vorspannungsrichtung (A), verläuft und daß die einander gegenüberliegenden Seitenflächen des oder jedes besagten Schlitzes auf entgegengesetzten Seiten der Ebene des Sitzabschnitts (6) des Ventilsitzes (5) liegen, so daß das Sitzende des Plungerkolbens (10) offen innerhalb des besagten Schlitzes bzw. der Schlitze liegt.

2. Ein Sicherheitsventil nach Anspruch 1, bei welchem die Tiefe jedes derartigen Ventilschlitzes (30) und der Radius der Dichtung (13) so ausgebildet sind, daß ein Segment (13a) der Fläche der Dichtung (13) offen in der Basis jedes Schlitzes liegt.

3. Ein Sicherheitsventil nach Anspruch 1 oder 2, bei welchem diejenige Fläche der Dichtung (13) die an der ringförmigen Lippe (4) anliegt, im wesentlichen bündig mit der Endfläche des Plungerkolbens (10) liegt, die auf dem Ventilsitzabschnitt (6) aufsitzt.

4. Ein Sicherheitsventil nach Anspruch 3, bei welchem die besagte Lippe (4) auf dem Ventilsitz (5) V-förmig ausgebildet ist und aus dem Sitzabschnitt (6) des Ventilsitzes herausragt und bei welchem die Kopfendfläche des Plungerkolbens (10) entsprechend flach ringförmig ausgebildet ist und in der geschlossenen Stellung des Ventils in direktem Kontakt auf dem Sitzabschnitt (6) des Ventilsitzes aufsitzt.

5. Ein Sicherheitsventil nach Anspruch 2, bei welchem die Fläche des offen liegenden Segments (13a) und Steifheit des Materials der Dichtungsscheibe (13) im wesentlichen so ausgewählt sind, daß die Ausbildung eines Wulstes aus Dichtungsmaterial vermieden wird, welcher die die Basis des Schlitzes (30) bildende Wand (30a) berühren könnte.

6. Ein Sicherheitsventil nach irgendeinem der vorhergehenden Ansprüche, bei welchem zwei oder mehrere derartige Ventilschlitze (30) vorhanden sind, wobei die Schlitze durch Wandabschnitte (31) des Ventilgehäuses (11) voneinander getrennt sind und bei welchem die Hauptkontaktflächen zwischen der Endfläche des Plungerkolbens (10) und dem Sitzabschnitt (6) im geschlossenen Zustand des Ventils in Sektoren auftreten, die innerhalb der besagten Wandabschnitte (31) angeordnet sind.

7. Ein Sicherheitsventil nach einem der Ansprüche 1 bis 6, bei welchem eine Einlaßbohrung (2) des Ventils in einen konischen Durchlaßabschnitt (3) mündet, welcher direkt zur herausragenden Lippe (4) führt und deren innere Oberfläche bildet.

8. Ein Sicherheitsventil nach einem der Ansprüche 1 bis 7, bei welchem die Dichtung (13) und/oder die Ausnehmung (12) so ausgestaltet sind, daß die Dichtung in ihrem unbelasteten Zustand die Ausnehmung (12) im Plungerkolben (10) unvollständig ausfüllt.

9. Ein Sicherheitsventil nach irgendeinem vorhergehenden Anspruch, bei welchem die Lippe (4) einen Scheiteldurchmesser von bis zu 25mm besitzt und aus dem Sitzabschnitt (6) des Ventilsitzes (5) in einer Höhe herausragt, die zwischen 1,5% und 5% ihres Scheiteldurchmessers liegt.

10. Ein Sicherheitsventil nach einem der Ansprüche 1 bis 8, bei welchem die Lippe (4) einen Scheiteldurchmesser besitzt der größer als 20mm ist und aus dem Sitzabschnitt (6) des Ventilsitzes (5) in einer Höhe herausragt, die zwischen 1% und 4% ihres Scheiteldurchmessers liegt.

11. Ein Sicherheitsventil nach irgendeinem vorhergehenden Anspruch, bei welchem die besagte Lippe (4) so angeordnet ist, daß sie innerhalb des äußeren Randes der Dichtung (13) mit einem Abstand liegt, der mindestens 1,2% des Dichtungsradius beträgt.

12. Ein Sicherheitsventil nach Anspruch 7, bei welchem, wenn das Ventil geschlossen ist, der Kontakt zwischen der Dichtung (13) und der Einlaßbohrung (2) des Ventils auf dessen konischen Durchlaßabschnitt (3) beschränkt ist.

13. Ein Sicherheitsventil nach Anspruch 12, bei welchem die axiale Länge des besagten konischen Durchlaßabschnitts (3) mindestens dem 1,25fachen der Höhe des Herausragens der Lippe (4) aus dem Sitzabschnitt (6) des Ventilsitzes entspricht.

14. Ein Sicherheitsventil nach irgendeinem der Ansprüche 1 bis 13, bei welchem die Elastomerdichtung (13) als kegelstumpfförmige Scheibe ausgebildet ist.

## Revendications

1. Soupape de sûreté comportant
un corps (11) de soupape comportant un siège (5) de soupape annulaire qui comporte une partie (6) de siège entourant un rebord (4) annulaire qui fait saillie de cette partie (6) de siège,
un piston (10) pouvant coulisser à l'intérieur du corps (11) de soupape,
un joint (13) d'étanchéité en élastomère porté dans un évidement (12) du piston, et
des moyens pour repousser le piston (10) suivant un sens (A) dirigé vers le siège (5) de soupape pour forcer le joint (13) d'étanchéité en contact étanche avec le rebord (4) du siège (5) de soupape, dans lequel
la profondeur totale du joint (13) d'étanchéité se trouve comprise dans la profondeur de l'évidement du piston (10) de sorte qu'à l'état fermé de la soupape une face d'extrémité du piston repose en contact direct avec la partie (6) de siège du siège (5) de soupape et dans lequel un ou plusieurs orifices d'évacuation est ou sont prévu(s)
caractérisée en ce que le ou chacun des orifices d'évacuation est sous la forme d'une fente (30) découpée dans la paroi du corps (11) de soupape suivant une direction sensiblement perpendiculaire à cette direction (A) de poussée, et en ce que les faces latérales opposées de la ou de chaque fente reposent sur les côtés opposés du plan de la partie (6) de siège du siège (5) de soupape de sorte que l'extrémité de siège du piston (10) est mise à nu dans la ou les fente(s).

2. Soupape de sûreté suivant la revendication 1, dans laquelle la profondeur de chaque fente (30) de soupape et le rayon du joint (13) d'étanchéité sont tels qu'une partie (13a) de la face du joint (13) d'étanchéité est mise à nu à l'intérieur de la base de chaque fente.

3. Soupape de sûreté suivant la revendication 1 ou 2, dans laquelle la face du joint (13) d'étanchéité qui porte contre le rebord (4) annulaire repose sensiblement de manière alignée avec la face d'extrémité du piston (10) qui est assis sur la partie (6) de siège de soupape.

4. Soupape de sûreté suivant la revendication 3, dans laquelle le rebord (4) sur le siège (5) de soupape est en forme de V et fait saillie de la partie (6) de siège du siège de soupape; et dans laquelle la face d'extrémité de nez du piston (10) est de manière correspondante annulaire plate et, à l'état fermé de la soupape, repose en contact direct avec la partie (6) de siège du siège de soupape.

5. Soupape de sûreté suivant la revendication 2, dans laquelle l'aire de la partie (13a) mise à nu et la raideur du matériau du disque (13) d'étanchéité sont choisies sensiblement pour empêcher la formation d'une nervure du matériau d'étanchéité qui pourrait venir en contact avec la paroi (30a) formant la base de la fente (30).

6. Soupape de sûreté suivant l'une quelconque des revendications précédentes, dans laquelle il y a deux fentes (30) de soupape de ce genre ou plus, les fentes étant séparées par des parties (31) de paroi du corps (11) de soupape, dans laquelle les aires principales de contact entre la face d'extrémité du piston (10) et la partie (6) de siège, à l'état fermé de la soupape, ont lieu dans des secteurs situés à l'intérieur des parties (31) de paroi.

7. Soupape de sûreté suivant l'une des revendications 1 à 6, dans laquelle un trou (2) d'entrée de soupape se termine en une partie (3) de gorge conique qui mène directement au rebord (4) faisant saillie pour former la surface intérieure de celui-ci.

8. Soupape de sûreté suivant l'une des revendications 1 à 7, dans laquelle le joint (13) d'étanchéité et/ou l'évidement (12) est ou sont de forme telle que le joint d'étanchéité remplit de manière incomplète l'évidement (12) du piston (10) à l'état non contraint du joint d'étanchéité.

9. Soupape de sûreté suivant l'une des revendications précédentes, dans laquelle le rebord (4) a un diamètre de crête allant jusqu'à 25 mm et fait saillie de la partie (6) de siège du siège (5) de soupape d'une hauteur qui est égale à environ entre 1,5% et 5% de son diamètre de crête.

10. Soupape de sûreté suivant l'une des revendications 1 à 8, dans laquelle le rebord (4) a un diamètre de crête supérieur à 20 mm et fait saillie de la partie (6) de siège du siège (5) de soupape d'une hauteur qui est comprise entre 1% et 4% de son diamètre de crête.

11. Soupape de sûreté suivant l'une des revendications précédentes, dans laquelle le rebord (4) est disposé de manière à être espacé vers l'intérieur de la périphérie extérieure du joint (13) d'étanchéité d'une distance qui est au moins égale à 1,2% du rayon du joint d'étanchéité.

12. Soupape de sûreté suivant la revendication 7, dans laquelle la soupape est fermée, le contact entre le joint (13) d'étanchéité et le trou (2) d'entrée de la soupape étant confiné à sa partie (3) de gorge conique.

13. Soupape de sûreté suivant la revendication 12, dans laquelle la longueur axiale de la partie (3) de gorge conique est au moins égale à 1,25 fois la hauteur de saillie du rebord (4) par rapport à la partie (6) de siège du siège de soupape.

14. Soupape de sûreté suivant l'une des revendications 1 à 13, dans laquelle le joint (13) d'étanchéité en élastomère a la forme d'un disque tronconique.
